# NEUE EUROPÄISCHE PATENTSCHRIFT

(11) **EP 0 849 113 B2**
(45) Veröffentlichungstag und Bekanntmachung des Hinweises auf die Entscheidung über den Einspruch: **29.09.2004**
(45) Hinweis auf die Patenterteilung: 16.08.2001
(21) Anmeldenummer: 97118502.0
(22) Anmeldetag: 24.10.1997
(51) Int. Cl.: B60N 3/08

(54) **Einbauaschenbecher in ein Kraftfahrzeug**
Built-in ashtray for a motor vehicle
Cendrier intégré pour un véhicule automobile

(30) Priorität: 20.12.1996 DE 19653302
(43) Veröffentlichungstag der Anmeldung: 24.06.1998
(73) Patentinhaber: fischerwerke Artur Fischer GmbH & Co. KG, 72178 Waldachtal (DE); DaimlerChrysler AG, 70567 Stuttgart (DE)
(72) Erfinder: Plocher, Bernd, 72108 Rottenburg-Seebronn (DE); Nguyen, Van-Hung, 71059 Sindelfingen (DE)
(74) Vertreter: Späth, Dieter, Dipl.-Ing.

(56) Entgegenhaltungen:
- DE-A- 3 811 340
- DE-A1- 3 433 992
- DE-C2- 3 410 701
- DE-U1- 8 606 430
- US-A- 2 162 142
- US-A- 2 254 861
- US-A- 2 812 097
- PATENT ABSTRACTS OF JAPAN vol. 17, no. 324 (M-1433), 21.Juni 1993 -& JP 05 038973 A (TOYOTA MOTOR CORP), 19.Februar 1993,

## Beschreibung

Die Erfindung betrifft einen Einbauaschenbecher für ein Kraftfahrzeug mit den Merkmalen des Oberbegriffs des Anspruches 1.

Ein derartiger Einbauaschenbecher ist bekannt aus der DE 38 11 340 C2. Der bekannte Einbauaschenbecher weist ein Gehäuse auf, das zum Einbau beispielsweise in eine Mittelkonsole eines Kraftfahrzeuges vorgesehen ist. Im Gehäuse ist ein kastenförmiger Aschenbecher nach Art einer Schublade geführt, er läßt sich aus einer in das Gehäuse eingeschobenen Grundstellung in eine aus einer vorderen Stirnseite des Gehäuses herausstehende Gebrauchsstellung verschieben. Am Aschenbecher ist ein Halter für einen Zigarettenanzünder in eine schräg nach oben stehende Gebrauchsstellung schwenkbar angebracht, so daß ein in den Halter gesteckter Zigarettenanzünder schräg nach oben herausziehbar ist. Der Halter wird von einem Hebel zu seiner Schwenkbewegung angetrieben, dessen eines Ende gelenkig am Gehäuse und dessen anderes Ende gelenkig am Halter angebracht ist. Infolge der Relativbewegung zwischen dem am Aschenbecher schwenkbar angebrachten Halter und dem Gehäuse beim Herausziehen des Aschenbechers aus dem Gehäuse verschwenkt der Hebel den Halter zwangsweise in seine nach oben stehende Gebrauchsstellung. Beim Einschieben des Aschenbechers in das Gehäuse verschwenkt der Hebel den Halter zwangsweise zurück in eine im Aschenbecher versenkte Grundstellung. Beim Herausziehen des Aschenbechers schwenkt der Hebel über seine Totpunktlage kinaus und bei vollständig herausgezogenem Aschenbecher verläuft der Hebel etwa parallel zu einer Längsachse des nach oben geschwenkten Halters, so daß durch Druck in Längsrichtung auf den Halter, beispielsweise beim Einstecken des Zigarettenanzünders, der Halter nicht verschiebbar ist. Ein Schließen des Aschenbechers und das Verschwenken des Halters nach unten in den Aschenbecher hinein erfolgt durch Druck gegen eine vordere Stirnseite des Aschenbechers.

Der bekannte Einbauaschenbecher hat allerdings den Nachteil, daß sein in der Gebrauchsstellung nach oben stehender Halter durch Druck von oben in die im Aschenbecher versenkte Stellung nach unten verschwenkbar ist. Wird beispielsweise beim Versuch den Zigarettenanzünder in den Halter einzustecken der Zigarettenanzünder versehentlich von oben auf den Halter aufgesetzt, verschwenkt der Halter nach unten in die im Aschenbecher versenkte Stellung und der Zigarettenanzünder läßt sich nicht mehr einstecken. Dies kann dazu führen, daß der noch glühende Zigarettenanzünder auf den Fahrzeugboden herunterfällt, was eine erhebliche Gefahr darstellt. Weiterer Nachteil des bekannten Einbauaschenbechers ist, daß sein in der Gebrauchsstellung nach oben stehender Halter, der über den Hebel gelenkig mit dem Gehäuse verbunden und am Aschenbecher schwenkbar gelagert ist, den Aschenbecher in das Gehäuse hineinzieht, wenn er nach unten verschwenkt wird. Sowohl durch das Verschwenken des Halters nach unten, als auch durch das Verschieben des Aschenbechers in das Gehäuse besteht die Gefahr, sich einen Finger einzuklemmen.

Aus der JP-A-05 38 973 ist ein weiterer Aschenbecher bekannt, dessen Zigarettenanzünder starr in den Aschenbecher eingebaut ist.

Der Erfindung liegt daher die Aufgabe zugrunde, einen Einbauaschenbecher der eingangs genannten Art dahingehend auszubilden, daß sein Halter in der vom Aschenbecher nach oben stehenden Gebrauchsstellung gegen Niederdrücken gesichert ist, wobei der Aschenbecher sich nicht durch Druck in beliebiger Richtung auf den Halter, sondern nur durch Druck gegen eine Frontseite des Aschenbechers schließen läßt.

Diese Aufgabe wird erfindungsgemäß durch die Merkmale des Anspruchs 1 gelöst. Der erfindungsgemäße Einbauaschenbecher weist eine Verriegelungseinrichtung auf, die den Halter bei aus dem Gehäuse heraus verschobenem Aschenbecher in seiner vom Aschenbecher nach oben stehenden Gebrauchsstellung verriegelt. Der Halter ist dadurch in seiner Gebrauchsstellung fixiert und kann nicht durch Einwirkung einer Kraft, egal aus welcher Richtung diese wirkt und wo sie am Halter angreift, abgesenkt werden. Auch läßt sich der Aschenbecher selbst nicht durch eine auf den Halter einwirkende Kraft in das Gehäuse verschieben, sondern nur durch eine am Aschenbecher unmittelbar angreifende Kraft. Die Verriegelungseinrichtung des Halters am Aschenbecher läßt sich durch eine Kulissensteuerung platzsparend und einfach herstellbar verwirklichen. Die Erfindung hat den Vorteil, daß der in seiner Gebrauchsstellung fixierte Halter das Einstekken des Zigarettenanzünders erleichtert, da der Halter keine Ausweichbewegung vollführt, wenn der Zigarettenanzünder versehentlich zunächst neben einem Einsteckloch am Halter angesetzt wird oder wenn versucht wird, den Zigarettenanzünder mit Winkelversatz in das Einsteckloch einzustecken. Die Handhabung des Zigarettenanzünders beim Einstecken in den Halter ist dadurch einfacher und sicherer. Die Erfindung verhindert die Gefahr des Einklemmens von Fingern.

Weiterbildungen des erfindungsgemäßen Aschenbechers ergeben sich aus den Unteransprüchen.

Vorzugsweise ver- und entriegelt die Verriegelungseinrichtung des erfindungsgemäßen Einbauaschenbechers den Halter in seiner nach oben stehenden Gebrauchsstellung selbsttätig durch das Verschieben des Aschenbechers aus dem Gehäuse heraus bzw. in das Gehäuse hinein.

Eine Ausgestaltung der Erfindung weist als Antriebseinrichtung für den Halter eine Kulissenführung auf. Dies ist eine Zwangsführung, die den Halter durch Verschieben des Aschenbechers in seine nach oben stehende Gebrauchsstellung bzw. zurück nach unten in eine Ausgangsstellung bewegt und hat den Vorteil, daß nur der Aschenbecher verschoben werden muß und nicht am Halter angegriffen zu werden braucht. Weiterer Vorteil der Kulissenführung ist, daß sie nahezu keinen Einbauraum beansprucht, und daß sie durch Kunststoffspritzgießen des Gehäuses und des Halters ohne zusätzlichen Herstellungsaufwand gefertigt werden kann.

Vorzugsweise wird der Aschenbecher in einer in das Gehäuse eingeschobenen Grundstellung mit einer zweiten Verriegelungseinrichtung verriegelt. Diese Verriegelungseinrichtung kann als an sich bekannte Herzkurvensteuerung ausgebildet sein, die den Aschenbecher am Ende des Einschiebwegs im Gehäuse verriegelt und durch kurzen Druck gegen eine Frontseite des Aschenbechers entriegelbar ist. Das Herausschieben des Aschenbechers aus dem Gehäuse in die Gebrauchsstellung und zugleich das Bewegen des Halters in dessen Gebrauchsstellung erfolgt vorzugsweise federbetätigt mit einem am Aschenbecher angreifenden Öffnungsfederelement.

Die Erfindung wird nachfolgend anhand eines in der Zeichnung dargestellten Ausführungsbeispiels näher erläutert. Es zeigen:
- Figur 1: eine perspektivische Darstellung eines erfindungsgemäßen Aschenbechers in seiner Gebrauchsstellung;
- Figuren 2a-c: einen Schnitt entlang Linie II-II in Figur 1 bei verschiedenen Stellungen des Aschenbechers.

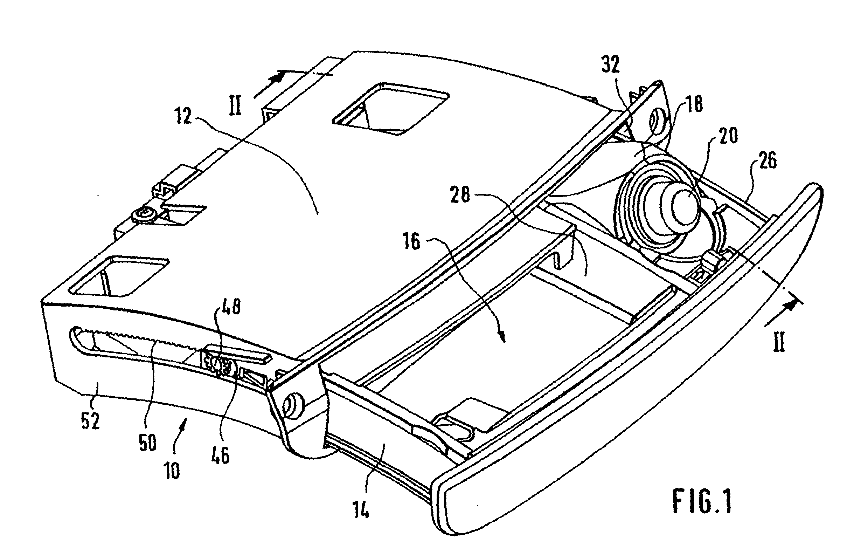

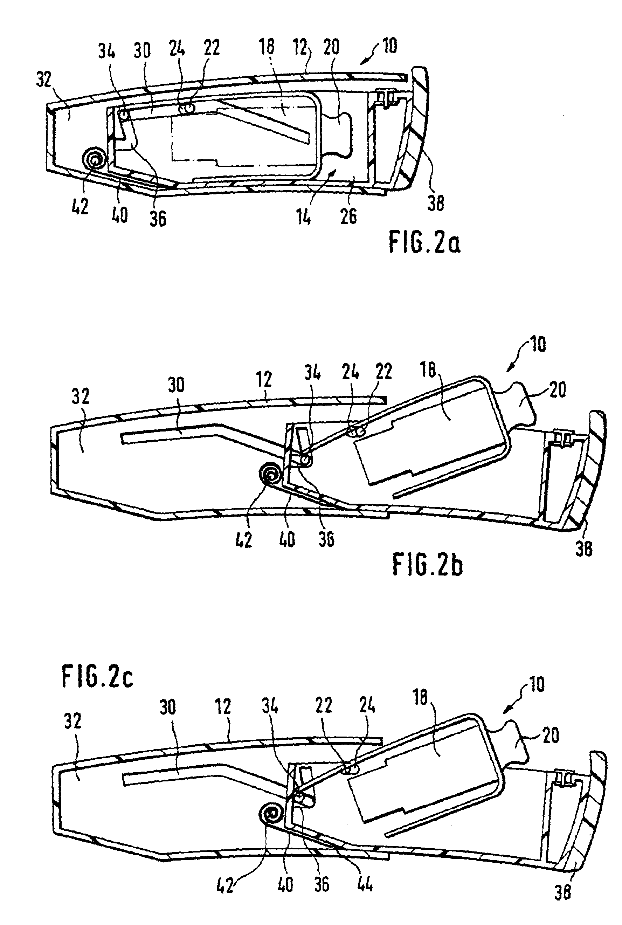

Der in Figur 1 dargestellte, erfindungsgemäße Einbauaschenbecher 10 weist ein Gehäuse 12 auf, das zum Einbau des Einbauaschenbechers 10 in eine Mittelkonsole eines Personenkraftwagens vorgesehen ist. Im Gehäuse 12 ist ein kastenförmiger Aschenbecher 14, der ein Aschefach 16 aufweist, schubladenartig verschiebbar geführt. Seitlich neben dem Aschefach 16 ist ein Halter 18 für einen in ihn eingesteckten Zigarettenanzünder20 schwenkbargelagert. Der Halter 18 für den Zigarettenanzünder 20 ist aus einer in den Aschenbecher 14 versenkten Grundstellung (Figur 2a) in eine vom Aschenbecher 14 schräg nach oben stehende Gebrauchsstellung (Figuren 1, 2b und 2c, schwenkbar. In der Gebrauchsstellung ist der Zigarettenanzünder 20 zugänglich und kann in Längsrichtung aus dem Halter 18 herausgezogen und in ihn hineingesteckt werden. Zur Schwenklagerung weist der Halter 18 zwei seitlich abstehende, mit im einstückige Schwenkzapfen 22 in einem Mittelbereich auf, die in kurze Langlöcher 24 des Aschenbechers 4 eingreifen. Die Langlöcher sind in einer Seitenwand 26 und einer den Halter 18 vom Aschefach 16 trennenden Zwischenwand 28 des Aschenbechers 14 angebracht. Sie verlaufen in Verschieberichtung des Aschenbechers 14.

Das Gehäuse 12, der Aschenbecher 14 und der Halter 18 sind Spritzgußteile aus Kunststoff.

Der erfindungsgemäße Einbauaschenbecher 10 weist eine Antriebseinrichtung auf, die den Halter 18 beim Verschieben des Aschenbechers 14 zwangsweise verschwenkt: Diese Antriebseinrichtung ist als Kulissenführung ausgebildet, sie weist eine Kulissenbahn in Form eines Schlitzes 30 in einer Seitenwand 32 des Gehäuses 12 auf, in die ein mit dem Halter 18 einstückiger, an dessen hinterem Ende seitlich abstehender Kulissenzapfen 34 eingreift. Die Kulissenbahn 30 verläuft im wesentlichen in Verschieberichtung des Aschenbechers 14 in der Seitenwand 32 des Gehäuses 12 von hinten nach vorn. In ihrem Mittelbereich ist die Kulissenbahn 30 abgewinkelt, in ihrem vorderen Bereich verläuft sie schräg nach vorn unten. Beim Verschieben des Aschenbechers 14 aus der in Figur 2a dargestellten Grundstellung in die in Figur 2b dargestellte Gebrauchsstellung bewegt sich der Kulissenzapfen 34 des Halters 18 in der Kulissenbahn 30 entlang. Dabei wird der Kulissenzapfen 34 im vorderen, schräg nach unten verlaufenden Bereich der Kulissenbahn 30 nach unten bewegt. Der Halter 18 verschwenkt um seine Schwenkzapfen 22, ein hinterer Teil des Halters 18 bewegt sich nach unten und sein vorderer, den Zigarettenanzünder 20 enthaltender Teil verschwenkt in die vom Aschenbecher 14 schräg nach oben stehende Gebrauchsstellung.

Der erfindungsgemäße Einbauaschenbecher 10 weist eine Verriegelungseinrichtung auf, die den Halter 18 in seiner nach oben geschwenkten Gebrauchsstellung verriegelt: Diese Verriegelungseinrichtung weist eine Kulissensteuerung mit einer Kulissenbahn 36 in Form eines Schlitzes in der Seitenwand 26 des Aschenbechers 14 auf. Der Kulissenzapfen 34 des Halters 18 durchgreift die Kulissenbahn 36 in der Seitenwand 26 des Aschenbechers 14 und greift mit einem seitlich aus der Seitenwand 26 des Aschenbechers 14 vorstehenden Ende in oben beschriebener Weise in die Kulissenbahn 30 in der Seilenwand 32 des Gehäuses 12 ein. Die Kulissenbahn 36 verläuft näherungsweise tangential zum Schwenkzapfen 22 des Halters 18 in der Seitenwand 26 des Aschenbechers 14 von oben nach unten. Sie hat die Höhe, die der Kulissenzapfen 34 beim Durchlaufen der Kulissenbahn 30 in der Seitenwand 32 des Gehäuses 12 zurücklegt. Der Kulissenzapfen 34 bewegt sich also beim Verschieben des Aschenbechers 14 aus dem Gehäuse 12 heraus in Längsrichtung der Kulissenbahn 30 in der Seitenwand 32 des Gehäuses 12 und wird von dieser Kulissenbahn 30 zugleich in der Kulissenbahn 36 in der Seitenwand 26 des Aschenbechers 14 von oben nach unten bewegt, wobei der Halter 18 in seine schräg nach oben stehende Gebrauchsstellung verschwenkt.

An ihrem unteren Ende ist die Kulissenbahn 36 in der Seitenwand 26 des Aschenbechers 14 nahezu rechtwinklig nach hinten abgewinkelt, sie endet mit nahezu radialem Verlauf in Bezug auf die Schwenkzapfen 22. Beim Verschieben des Aschenbechers 14 aus dem Gehäuse 12 heraus gelangt der Kulissenzapfen 34 an einem vorderen Ende der Kulissenbahn 30 in der Seitenwand des Gehäuses 12 zur Anlage und erhält den mit dem Aschenbecher 14 mitbewegten Halter 18 zurück. Der Aschenbecher 14 läßt sich noch ein kurzes Stück weiter aus dem Gehäuse 12 heraus verschieben, nämlich um die Länge der Langlöcher 24 in seiner Seitenwand 26 und in seiner Zwischenwand 28, in denen der Halter 18 mit seinen Schwenkzapfen 22 gelagert ist. Dabei gelangen die Schwenkzapfen 22 von einem vorderen zu einem hinteren Ende der Langlöcher 24 (vgl. Figuren 2b und 2c). Der Aschenbecher 14 vollführt also am Ende seiner Verschiebebewegung aus dem Gehäuse 12 heraus eine kurze Relativbewegung gegenüber dem in der Kulissenbahn 30 des Gehäuses 12 zurückgehaltenen Halter 18. Durch diese Relativbewegung zwischen Halter 18 und Aschenbecher 14 gelangt der Kulissenzapfen 34 in den abgewinkelten Endabschnitt der Kulissenbahn 36 in der Seitenwand 26 des Aschenbechers 14 (Figur 2c) und verhindert, daß sich der Halter 18 verschwenken läßt. Der Halter 18 ist dadurch in seiner schräg nach oben stehenden Gebrauchsstellung verriegelt. Durch Druck gegen den Halter 18, egal in welcher Richtung, lassen sich weder der Halter 18 noch der Aschenbecher 14 bewegen. Zum Schließen des erfindungsgemäßen Einbauaschenbechers 10 muß sein Aschenbecher 14 vorzugsweise durch Druck gegen seine Frontseite 38 in das Gehäuse 10 hineinverschoben werden. Dabei kommt der Kulissenzapfen 34 des Halters 18 aus dem abgewinkelten Endabschnitt der Kulissenbahn 36 in der Seitenwand 26 des Aschenbechers 14 frei, d.h. er wird entriegelt, so daß der Halter 18 nach unten in den Aschenbecher hineinverschwenkbar und der Aschenbecher 14 in das Gehäuse 12 hineinverschiebbar ist. Das Verschwenken des Halters 18 erfolgt zwangsläufig durch den in die Kulissenbahn 30 in der Seitenwand des Gehäuses 12 eingreifenden Kulissenzapfen 34.

Zum Verschieben des Aschenbechers 14 aus dem Gehäuse 12 heraus weist der Einbauaschenbecher 10 eine Rollfeder 40 auf, deren Wickel 42 drehbar an einer Rückseite des Aschenbechers 14 gehalten und deren abgewickeltes Ende 44 in einem vorderen Bereich des Gehäuses 12 angebracht ist. Eine solche Rollfeder 40 ist an sich bekannt. Sie weist ein selbstaufwikkeindes Band auf, d.h. sie ist eine Zugfeder.

In der in das Gehäuse 12 hineinverschobenen Grundstellung wird der Aschenbecher 14 von einer zweiten Verriegelungseinrichtung verriegelt. Diese zweite Verriegelungseinrichtung, die in der Zeichnung nicht sichtbar ist, weist eine an sich bekannte Herzkurvensteuerung auf. Diese verriegelt den Aschenbecher 14 beim Verschieben in das Gehäuse 12 hinein in der Grundstellung. Durch kurzes Eindrücken des Aschenbechers 14 in das Gehäuse 12 hinein entriegelt die zweite Verriegelungseinrichtung den Aschenbecher 14 und dieser wird von der Rollfeder 40 aus dem Gehäuse 12 heraus verschoben. Dabei verschenkt zugleich der Halter 18 in seine Gebrauchsstellung nach oben.

Die Verschiebebewegung des Aschenbechers 14 wird von einem Rotationsdämpfungselement 46 gedämpft, das seitlich am Aschenbecher 14 angebracht ist und dessen Zahnrad 48 mit einer Zahnstange 50 in einer zweiten Seitenwand 52 des Gehäuses 12 kämmt.

## Patentansprüche

1. Einbauaschenbecher für ein Kraftfahrzeug, mit einem Gehäuse, das eine Führung aufweist, mit der ein Aschenbecher schubladenartig verschiebbar im Gehäuse gelagert ist, und mit einem Halter für einen Zigarettenanzünder, der in eine vom Aschenbecher nach oben stehende Gebrauchsstellung bewegbar am Aschenbecher angebracht ist, wobei der Einbauaschenbecher eine Antriebseinrichtung aufweist, die den Halter beim Verschieben des Aschenbechers aus dem Gehäuse heraus in die Gebrauchsstellung nach oben und beim Verschieben des Aschenbechers in das Gehäuse hinein nach unten bewegt, wobei der Einbauaschenbecher (10) eine Verriegelungseinrichtung (34, 36) aufweist, die den Halter (18 in seiner vom Aschenbecher (14) nach oben stehenden Gebrauchsstellung verrlegelt, **dadurch gekennzeichnet, dass** die Verriegelungseinrichtung eine Kulissensteuerung (22, 24, 34, 36) an Aschenbecher (14) und Halter (18) aufweist.

2. Einbauaschenbecher nach Anspruch 1, **dadurch gekennzeichnet, daß** der Halter (18) nach oben schwenkbar am Aschenbecher (14) gelagert ist.

3. Einbauaschenbecher nach Anspruch 1, **dadurch gekennzeichnet, daß** die Verriegelungseinrichtung (34, 36) den Halter (18) durch Verschieben des Aschenbechers (14) aus dem Gehäuse (12) heraus verriegelt und durch Verschieben des Aschenbechers (14) in das Gehäuse (12) hinein entriegelt.

4. Einbauaschenbecher nach Anspruch 1, **dadurch gekennzeichnet, daß** die Antriebseinrichtung eine Kulissenführung (30, 34) an Gehäuse (12) und Halter (18) aufweist.

5. Einbauaschenbecher nach Anspruch 1, **dadurch gekennzeichnet, daß** er eine zweite Verriegelungseinrichtung aufweist, die den Aschenbecher (14) in einer in das Gehäuse (12) hineinverschobenen Grundstellung verriegelt.

6. Einbauaschenbecher nach Anspruch 5, **dadurch gekennzeichnet, daß** er ein Öffnungsfederelement (40) aufweist, das den Aschenbecher (14) in eine aus dem Gehäuse (12) herausstehende Gebrauchsstellung verschiebt.

## Claims

1. Built-in ashtray for a motor vehicle, with a housing, which has a guide means with which an ashtray is mounted in the housing so as to be displaceable in the manner of a drawer, and with a holder for a cigarette lighter, which holder is mounted so as to be movable on the ashtray into a position of use extending obliquely upwards from the ashtray, the built-in ashtray having a drive device which, as the ashtray is displaced out of the housing, moves the holder upwards into the position of use and, as the ashtray is displaced into the housing, moves the holder downwards, the built-in ashtray (10) having a locking device (34, 36) which locks the holder (18) in its position of use extending upwards from the ashtray (14), **characterised in that** the locking device comprises a sliding control means (22, 24, 34, 36) on the ashtray (14) and holder (18).

2. Built-in ashtray according to claim 1, **characterised in that** the holder (18) is mounted on the ashtray (14) so as to pivot upwards.

3. Built-in ashtray according to claim 1, **characterised in that** the locking device (34, 36) locks the holder (18) through displacement of the ashtray (14) out of the housing (12) and unlocks it through displacement of the ashtray (14) into the housing (12).

4. Built-in ashtray according to claim 1, **characterised in that** the drive device comprises a sliding guide (30, 34) on the housing (12) and holder (18).

5. Built-in ashtray according to claim 1, **characterised in that** it has a second locking device, which locks the ashtray (14) in a basic position in which it is pushed into the housing (12).

6. Built-in ashtray according to claim 5, **characterised in that** it has an opening spring element (40) which displaces the ashtray (14) into a position of use in which it projects from the housing (12).

## Revendications

1. Cendrier encastrable destiné à un véhicule automobile, comprenant un boîtier muni d'un guidage, par lequel un cendrier est logé dans le boîtier de manière à pouvoir coulisser comme un tiroir, et d'un support pour allume-cigares, qui est monté contre le cendrier de manière à pouvoir pivoter vers une position d'utilisation orientée vers le haut par rapport au cendrier, le cendrier encastrable étant muni d'un dispositif d'entraînement qui, pendant le coulissement du cendrier hors du boîtier, fait basculer le support vers la position d'utilisation orientée vers le haut et, pendant le coulissement du cendrier vers l'intérieur du boîtier, fait basculer
ledit support vers le bas, le cendrier encastrable (10) comporte un dispositif de verrouillage (34, 36), par lequel le support (18) est bloqué dans sa position d'utilisation orientée vers le haut par rapport au cendrier (14), **caractérisé en ce que** le dispositif de verrouillage (34, 36) présente des tétons de pivotement (22, 24) contre le cendrier (14) et le support (18).

2. Cendrier encastrable selon la revendication 1, **caractérisé en ce que** le support (18) est logé contre le cendrier (14) de manière à pouvoir pivoter vers le haut.

3. Cendrier encastrable selon la revendication 1, **caractérisé en ce que** le dispositif de verrouillage (34, 36) bloque le support (18) sous l'effet du coulissement du cendrier (14) hors du boîtier (12) et débloque ledit support sous l'effet du coulissement du cendrier (14) vers l'intérieur du boîtier (12).

4. Cendrier encastrable selon la revendication 1, **caractérisé en ce que** le dispositif d'entraînement comporte un guide de coulisse (30, 34) réalisé sur le boîtier (12) et le support (18).

5. Cendrier encastrable selon la revendication 1, **caractérisé en ce que** ledit cendrier encastrable comporte un deuxième dispositif de verrouillage, par lequel le cendrier (14) est bloqué dans une position de base insérée dans le boîtier (12).

6. Cendrier encastrable selon la revendication 5, **caractérisé en ce que** ledit cendrier encastrable comporte un élément à ressort d'ouverture (40) par lequel le cendrier (14) coulisse hors du boîtier (12) dans une position d'utilisation.
